# FASCICULE DE BREVET EUROPEEN

(11) **EP 0 351 270 B1**
(45) Date de publication et mention de la délivrance du brevet: **28.12.1994**
(21) Numéro de dépôt: 89401799.5
(22) Date de dépôt: 26.06.1989
(51) Int. Cl.: C01G 23/053

(54) **Procédé de préparation d'oxyde de titane et d'articles à base d'oxyde de titane**
Verfahren zur Herstellung von Titanoxid und Gegenstände auf der Basis von Titanoxid
Process for the preparation of titanium oxide and articles based on titanium oxide

(30) Priorité: 01.07.1988 FR 8808911
(43) Date de publication de la demande: 17.01.1990
(73) Titulaire: RHONE-POULENC CHIMIE, 92408 Courbevoie Cédex (FR)
(72) Inventeur: Chopin, Thierry, F-93200 Saint Denis (FR); Fourre, Patrick, F-75013 Paris (FR); Quemere, Eric, F-95240 Cormeilles-en-Parisis (FR)
(74) Mandataire: Dutruc-Rosset, Marie-Claude

(56) Documents cités:
- EP-A- 0 177 198
- EP-A- 0 319 365
- BE-A- 359 277
- BE-A- 424 494
- DE-A- 1 792 798
- FR-A- 2 177 846
- FR-A- 2 585 973
- FR-A- 2 593 166
- GB-A- 308 725
- JP-A-53 039 296
- JP-A-58 009 873

## Description

La présente invention concerne un procédé de fabrication d'articles formés en oxyde de titane.

Elle a plus particulièrement pour objet un procédé de préparation d'un oxyde de titane susceptible d'être mis en forme.

Actuellement, dans certains procédés tels que, par exemple, la dénitrification et/ou désulfuration des fumées, le procédé Claus pour la production de soufre élémentaire, on utilise préférentiellement des catalyseurs à base d'oxyde de titane. De plus, ces catalyseurs sont utilisés sous forme de lit dans des colonnes et doivent présenter des formes permettant de limiter les pertes de charge. Ces catalyseurs sont donc le plus souvent obtenus par mise en forme d'une poudre, par exemple par moulage, extrusion ou analogue.

Toutefois, ils doivent également présenter de bonnes propriétés mécaniques pour éviter une usure par attrition et chocs et une porosité ou surface spécifique suffisante pour obtenir une bonne efficacité en catalyse.

On connaît déjà, notamment par le brevet européen n° 38741, un procédé de mise en forme de l'oxyde de titane permettant d'obtenir des articles présentant de bonnes propriétés mécaniques et également une porosité suffisante pour une utilisation de ces articles en catalyse ou support de catalyse.

Toutefois, l'oxyde de titane susceptible d'être mis en forme est obtenu par hydrolyse d'une solution de sulfate de titane ou d'une solution obtenue par l'attaque sulfurique de l'Ilménite.

Les oxydes de titane obtenus par hydrolyse d'un autre composé du titane tel que l'oxychlorure de titane, ne peuvent être utilisés pour former des articles présentant de bonnes propriétés mécaniques et une surface spécifique ou porosité suffisante pour une utilisation en catalyse.

Ainsi, le brevet japonais n° 53095893 indique que l'oxyde de titane obtenu par hydrolyse du chlorure de titane ne peut être mis en forme.

L'invention a notamment pour objet de remédier à ces inconvénients en proposant un procédé de fabrication d'articles formés à partir d'une poudre d'oxyde de titane obtenue par thermohydrolyse d'un composé du titane, présentant de bonnes propriétés mécaniques et une surface spécifique élevée.

A cet effet, l'invention propose un procédé de préparation d'un oxyde de titane susceptible d'être mis en forme consistant en une hydrolyse d'un composé du titane choisi dans le groupe constitué par les halogénures, oxyhalogénures, nitrates et alkoxydes de titane caractérisé en ce que cette hydrolyse est conduite en présence d'au moins un composé choisi parmi :
- les acides comprenant au moins un groupement carboxyle et au moins deux groupements hydroxyles et/ou amines, ou au moins deux groupements carboxyles et au moins un groupement hydroxyle et/ou amine, et leurs sels.
- les acides phosphoriques organiques de formules suivantes : 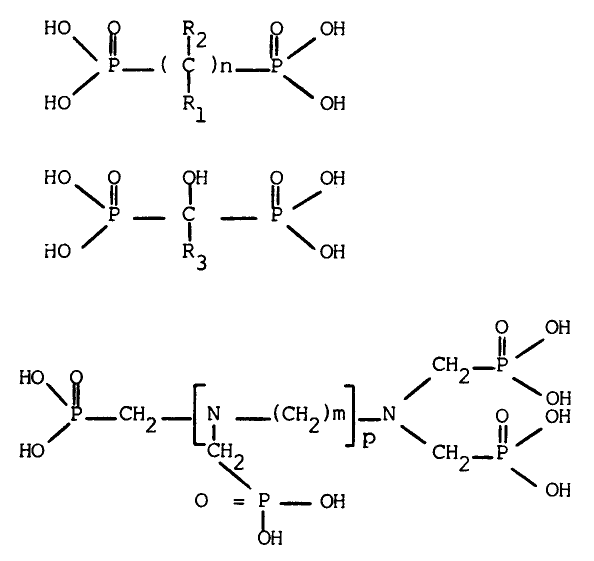
Dans lesquelles, n et m sont des nombres entiers compris entre 1 et 6, p est un nombre entier compris entre 0 et 5, R₁,R₂,R₃ identiques ou différents représentant un groupement hydroxyle, amino, aralkyl, aryl, alkyl, ou l'hydrogène.

L'oxyde de titane ainsi obtenu peut être mis en forme après filtration et séchage.

Selon une caractéristique de l'invention le composé acide ajouté dans le milieu à hydrolyser est un composé organique, de préférence aliphatique, substitué ou non.

Le composé organique comprendra de 1 à 15 atomes de carbone, de préférence de 1 à 10 atomes de carbone.

Les composés acides convenables pour l'invention sont, par exemple :
- les acides hydroxypolycarboxyliques, et plus particulièrement les acides hydroxydi - ou hydroxytricarboxyliques, comme par exemple l'acide malique, l'acide citrique et l'acide tartronique
- les acides (polyhydroxy)monocarboxyliques, comme par exemple l'acide glucoheptonique et l'acide gluconique
- les acides poly(hydroxycarboxyliques), comme par exemple l'acide tartrique
- les aminoacides dicarboxyliques et leurs amides correspondantes, comme par exemple l'acide aspartique, l'asparagine, l'acide glutamique et la glutamine
- les aminoacides monocarboxyliques, hydroxylés ou non, comme par exemple la lysine, la sérine, la tyrosine, l'hydroxyproline, la thréonine et l'arginine
- aminotriphosphonate de méthylène, éthylènediaminotétraphosphonate de méthylène, triéthylènetétraaminohexaphosphonate de méthylène, tétra- éthylènepentaaminoheptaphosphonate de méthylène, pentaéthylènehexa- aminooctaphosphonate de méthylène
- diphosphonate de méthylène, de 1-1′ éthylène, de 1,2 éthylène, de 1,1′ propylène, de 1,3 propylène, de 1,6 hexaméthylène, 2,4 dihydoxypentaméthylène - 2,4 diphosphonate, 2,5 dihydroxyhexaméthylène - 2,5 disphosphonate ; 2,3 dihydroxybutylène - 2,3 diphosphonate ; 1 hydroxybenzyle - 1,1′ diphosphonate ; 1 aminoéthylène 1-1′ diphosphonate ; hydroxyméthylène diphosphonate ; 1 hydroxyéthylène 1,1′ diphosphonate ; 1 hydroxypropylène 1-1′ diphosphonate ; 1 hydroxybutylène 1-1′ diphosphonate ; 1 hydroxyhexaméthylène - 1,1′ diphosphonate.

Les sels de ces acides sont également convenables pour l'invention. Les sels préférés sont les sels de métaux alcalins, tels que les sels de sodium, ou les sels d'ammonium.

La concentration en composé acide de la solution de composé du titane à hydrolyser n'est par critique.

A titre indicatif, cette concentration est comprise entre 0,01 mole/litre environ et 1 mole/litre environ, de préférence entre 0,01 mole/litre environ et 0,1 mole/litre.

Egalement, la concentration du composé du titane dans la solution à hydrolyser n'est par critique.

De préférence, cette concentration est comprise entre 0,1 mole/litre environ et 5 mole/litre environ exprimée en titane.

Selon une autre caractéristique de l'invention, l'hydrolyse est effectuée à une température supérieure ou égale à 70°C. Toutefois, l'hydrolyse peut être réalisée à température inférieure mais avec une cinétique très faible.

Le solide précipité qui est sous forme d'oxyde de titane ou d'acide ortho ou métatitanique est récupéré par filtration par exemple. Ce solide peut être lavé pour éliminer les éventuelles impuretés, puis séché en étuve par exemple.

L'analyse par diffraction X montre que le produit ainsi obtenu est un oxyde de titane faiblement cristallisé les cristaux sont sous la forme anatase.

Une analyse de la dimension et nature des particules élémentaires d'oxydes de titane montre qu'elles sont des agrégats de cristallites. Ces agrégats ont une dimension moyenne supérieure à 20 nanomètres, généralement comprise entre 30 - 70 nanomètres. Ces particules élémentaires ont des dimensions nettement plus importantes que celles obtenus par l'hydrolyse des mêmes composés en absence de composés organiques tels que décrits ci-dessus.

Cette différence dans la dimension des particules élémentaires de l'oxyde de titane obtenu peut expliquer la différence de comportement de l'oxyde de titane lors de sa mise en forme et notamment l'obtention d'articles présentant de bonnes propriétés mécaniques. Toutefois, cette explication n'est donnée qu'à titre indicatif et ne peut limiter la portée de l'invention.

A cet effet, l'invention a également pour objet un procédé de fabrication d'un article par mise en forme de l'oxyde de titane obtenu selon le procédé décrit ci-dessus, ce procédé consiste à réaliser un mélange, par exemple par malaxage, comprenant de 45 à 99% en poids d'une poudre constituée de particules élémentaires de dimension supérieure à 20 ηm, de préférence comprise entre 30 et 70 ηm d'oxyde de titane obtenu selon le procédé de l'invention et séché pour avoir une perte au feu comprise entre 1 et 50%, 1 à 40% en poids d'eau et 0 à 15% en poids d'additifs de mise en forme, à mettre en forme ledit mélange, par exemple par extrusion, moulage ou analogue, et à sécher et calciner éventuellement l'article obtenu. La concentration en eau ci-dessus correspond à l'eau ajoutée au mélange et ne prend pas en compte l'eau de constitution de la poudre d'oxyde de titane.

Selon un mode de réalisation préféré de l'invention le mélange comprend de 55 à 94,9 % en poids de poudre d'oxyde de titane de 5 à 35 % d'eau et de 0,1 à 10 % en poids d'additif de mise en forme.

Les articles obtenus selon le procédé de l'invention présentent une solidité ou résistance à l'écrasement et une attrition exceptionnelles ainsi qu'une surface spécifique élevée qui peut notamment s'élever jusqu'à environ 300 m²/g. En outre, la porosité et la distribution de pores peuvent être facilement réglées.

Ainsi comme indiqué dans le brevet européen n° 38741, la surface spécifique de l'article obtenu peut varier entre 5 et 300 m²/g selon la température de calcination.

Le volume poreux des produits obtenus varie entre 0,05 et 0,5 cm³/g. Ce volume poreux peut être facilement réglé en choisissant la nature des additifs de mise en forme, et la perte au feu du mélange à mettre en forme ainsi que par choix de la température de calcination. Il est également possible de régler ce volume poreux par addition, dans le mélange, des agents porogènes tels que, par exemple, le charbon de bois, la cellulose cristalline, l'amidon, des polymères organiques ou analogues.

Les additifs de mise en forme que l'on peut mettre en oeuvre dans le procédé de l'invention sont ceux utilisés classiquement dans les techniques de mise en forme. Ces additifs confèrent à la pâte obtenue par malaxage les propriétés rhéologiques adaptées à la mise en forme. A titre d'exemple d'additifs de mise en forme, on peut citer notamment : la cellulose, la carboxyméthyl-cellulose, la carboxyéthyl-cellulose, du tall-oil, les gommes xanthane, des agents tensio-actifs, des agents floculants comme les polyacrylamides, le noir de carbone, les amidons, l'acide stéarique, l'alcool polyacrylique, l'alcool polyvinylique, des biopolymères, le glucose, les polyéthylènes glycols, des acides minéraux.

Selon une variante du procédé de l'invention, on peut ajouter au mélange devant être mis en forme, un constituant choisi parmi la silice, l'alumine, les argiles, les silicates, le sulfate de titane, les fibres céramiques des sulfates d'alcalino-terreux, ou analogues.

La mise en forme du mélange est réalisée par différentes méthodes telles que, par exemple, l'extrusion, le moulage. Ainsi, il est possible de fabriquer des articles de formes variées. A titre d'exemple de forme on peut citer les formes sphérique, cylindrique, de pastille, de boulette, de granulé, de nid d'abeille ou d'extrudés à section polylobée.

Les dispositifs de mise en forme pouvant être utilisés pour la mise en oeuvre du procédé de l'invention sont, par exemple, les machines à pastiller, les granulateurs, les extrudeuses, ou analogues.

Les articles obtenus peuvent être notamment utilisés comme catalyseurs dans les procédés de dénitrification, désulfuration des gaz, par exemple, des gaz résiduaires industriels, ou dans le procédé Claus pour la production de soufre élémentaire. Cette liste n'est pas limitative.

Ils peuvent également être utilises comme support de catalyseur en association avec des phases catalytiques variées deposées sur la surface de l'oxyde de titane selon des procédés connus de l'homme de metier. Ainsi, il est possible de produire des catalyseurs de dénitrification par dépôt de tungstène ou vanadium, ou des catalyseurs d'oxydation notamment de l'hydrogène sulfureux par dépôt de nickel, fer, cobalt par exemple.

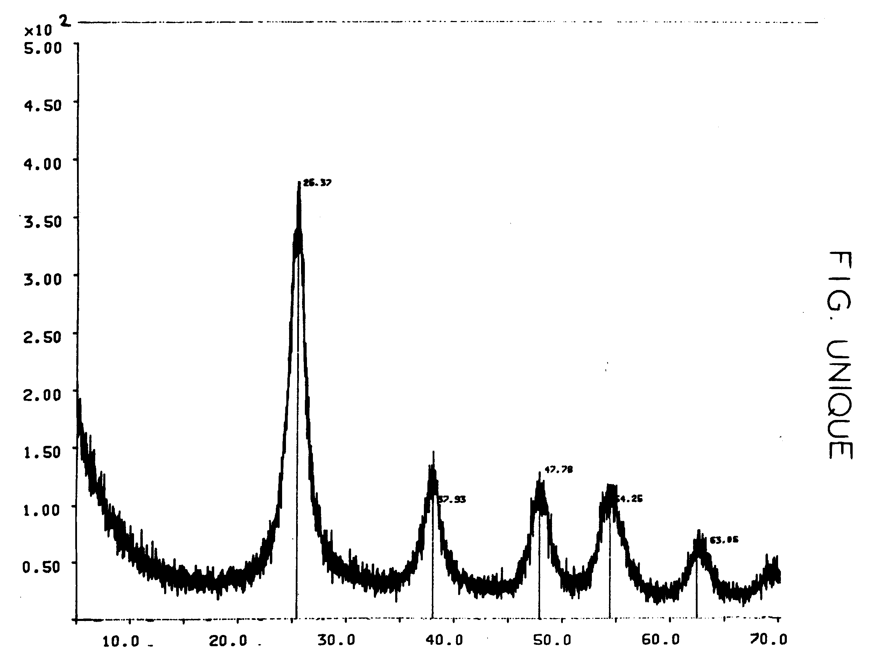

L'invention sera plus clairement illustrée par les exemples donnés ci-dessous uniquement a titre indicatif et la figure unique représentant un diagramme de diffraction des rayons X correspondant à l'analyse de l'oxyde de titane obtenu dans l'exemple 1.

### EXEMPLE 1

A un litre de solution d'oxychlorure de titane contenant une mole de Ti, on ajoute 0,05 mole d'acide tartrique de formule : 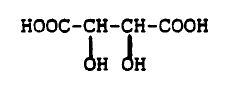
La solution est ensuite portée à ébullition et y est maintenue pendant 4 heures.

Après refroidissement, la solution est filtrée et le solide obtenu est lavé par un litre d'eau distillée, puis séché. Le séchage du produit est réalisé par différentes méthodes et avantageusement par atomisation. La poudre a une perte au feu de 20 %.

L'analyse par diffraction X indique que le produit obtenu est de l'oxyde de titane présent uniquement sous forme anatase, et faiblement cristallisé. En effet, le spectre correspondant représenté à la figure unique comprend des raies très larges et peu importante en intensité, ce qui est caractéristique d'un produit faiblement cristallisé.

L'analyse de la poudre obtenue par la méthode MET (microscopie électronique à transmission) montre que celle-ci est constituée de particules élémentaires de dimension moyenne égale 50 nanomètres environ.

500 g de cette poudre sont malaxés avec 130 g d'eau et 60 g d'un additif de mise en forme, dans le cas présent de l'acide nitrique, pendant 1 heure dans un malaxeur KUSTNER
(nom commercial).

Le mélange obtenu a la composition suivante :
69 % poudre de TiO₂
21 % d'eau (eau ajoutée)
10 % HNO₃ (additif de mise en forme)
Ce mélange est extrudé en granulé cylindrique de diamètre 3,2 mm.

Ces extrudés sont séchés à 120°C pendant 8 heures et calcinés à 350°C pendant 2 heures.

Les articles ou extrudés obtenus présentent les propriétés suivantes déterminées par les méthodes classiques d'analyse.

| | |
|---|---|
| Surface spécifique | 200 m²/g |
| Volume poreux total | 32 cm³/g |
| Ecrasement grain à grain | 1 daN/mm |

### EXEMPLE 2

A un litre de solution d'oxychlorure de titane contenant 0,5 mole de Ti, on ajoute 0,1 mole d'acide citrique de formule : 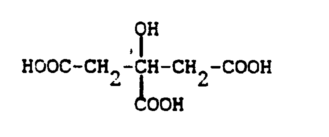
La solution ainsi obtenue subit le même traitement que dans l'exemple 1.

La poudre d'oxyde de titane obtenue présente les mêmes caractéristiques que celle de l'exemple 1 et sa mise en forme par extrusion selon le procédé décrit à l'exemple 1 permet d'obtenir des articles présentant les mêmes caractéristiques que celles de l'exemple 1.

### EXEMPLE 3

L'exemple 2 est répété dans les mêmes conditions, mais en remplaçant l'acide citrique par de l'acide aspartique de formule : 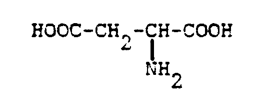
Là encore, le solide obtenu est de l'oxyde de titane sous forme anatase, faiblement cristallisé, identique à celui obtenu à l'exemple 1.

### EXEMPLE 4

L'exemple 2 est répété dans les mêmes conditions, mais en remplaçant l'acide citrique par du glucoheptonate de sodium de formule :

HO-CH₂-(CHOH)₅-COO Na

Le solide obtenu est de l'oxyde de titane sous forme anatase faiblement cristallisé identique à celui obtenu à l'exemple 1.

### EXEMPLE COMPARATIF 5

On répète l'exemple 1 en omettant d'ajouter de l'acide tartrique. Le solide lavé et non séché est remis en suspension à un pH de 1,0 : il décante spontanément. L'analyse par diffraction X indique qu'il est constitué d'oxyde de titane uniquement sous forme rutile.

L'analyse par MET de la poudre obtenue montre également qu'elle est constituée de cristallites de dimensions voisines de 5 nanomètres.

Cette poudre a été séchée comme dans l'exemple 1 et un essai de mise en forme selon le procédé décrit dans l'exemple 1 a été réalisé.

Avec un malaxage très poussé, on réussit à obtenir une pâte extrudable. Les granulés obtenus après séchage et calcination à une température de 200°C ou plus présentent des propriétés déplorables.

Ainsi, ces granulés ne peuvent être manipulés car ils se désagrègent quand on les saisit entre deux doigts de la main, ou lorsqu'ils s'entrechoquent entre eux.

## Revendications

1. Procédé de fabrication d'un article à base d'oxyde de titane par mise en forme d'un produit divisé, caractérisé en ce qu'il consiste :
- à préparer l'oxyde de titane sous forme de particules d'anatase par hydrolyse d'un composé du titane choisi dans le groupe constitué par les halogénures, oxyhalogénures, nitrates et alkoxydes de titane, en présence d'au moins un composé (I) choisi dans le groupe constitué par les acides comprenant au moins un groupement carboxyle et au moins deux groupements hydroxyles et/ou amines, les acides comprenant au moins deux groupements carboxyles et au moins un groupement hydroxyle et/ou amine, et les sels de ces groupes d'acides, et les acides phosphoriques organiques de formules suivantes : 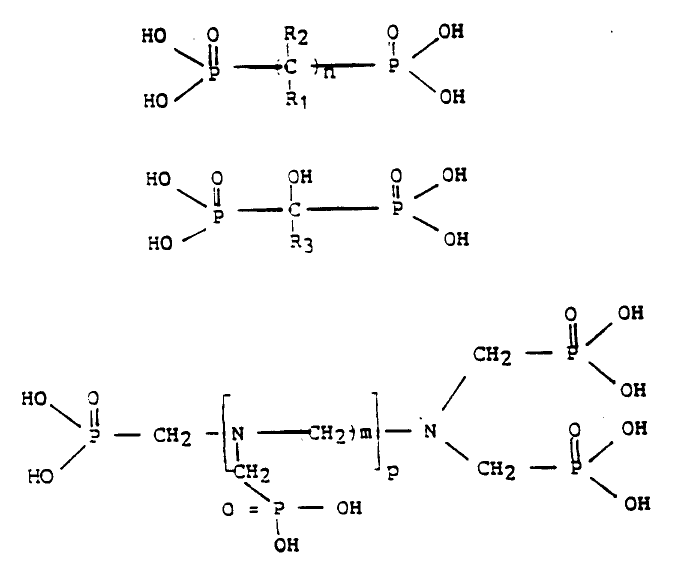 dans lesquelles, n et m sont des nombres entiers compris entre 1 et 6, p est un nombre entier compris entre 0 et 5, R₁, R₂, R₃ identiques ou différents représentant un groupement hydroxyle, amino, aralkyl, aryl, alkyl ou l'hydrogène,
- à récupérer le précipité obtenu,
- à sécher l'oxyde de titane obtenu sous forme divisée pour obtenir un oxyde de titane faiblement cristallisé, constitué de particules élémentaires de dimension supérieure à 20 nm ayant une perte au feu comprise entre 1 et 50 %,
- à réaliser un mélange contenant de 1 à 40 % en poids d'eau ajoutée, de 0 à 15 % en poids d'additif de mise en forme et de 45 à 99 % en poids de l'oxyde de titane séché,
- à mettre en forme ledit mélange puis à sécher et calciner éventuellement les produits obtenus.

2. Procédé selon la revendication 1, caractérisé en ce que le composé acide ajouté est un composé à chaîne hydrocarbonée substituée ou non.

3. Procédé selon la revendication1, caractérisé en ce que le composé acide est un composé à chaîne hydrocarbonée aliphatique.

4. Procédé selon la revendication 2 ou 3, caractérisé en ce que la chaîne hydrocarbonée comprend de 1 à 15 atomes de carbone.

5. Procédé selon la revendication 4, caractérisé en ce que la chaîne hydrocarbonée comprend de 1 à 10 atomes de carbone.

6. Procédé selon l'une des revendications précédentes, caractérisé en ce que le composé acide ajouté est choisi dans le groupe comprenant :
- les acides hydroxypolycarboxyliques, et plus particulièrement les acides hydroxydi- ou hydroxytricarboxyliques, de préférence l'acide malique, l'acide citrique et l'acide tartronique,
- les acides (polyhydroxy)monocarboxyliques, de préférence l'acide glucoheptonique et l'acide gluconique,
- les acides poly(hydroxycarboxyliques), de préférence l'acide tartrique,
- les aminoacides dicarboxyliques et leurs amides correspondantes, de préférence l'acide aspartique, l'asparagine, l'acide glutamique et la glutamine,
- les aminoacides monocarboxyliques, hydroxylés ou non, de préférence la lysine, la sérine, la tyrosine, l'hydroxyproline, la thréonine et l'arginine,
- aminotriphosphonate de méthylène, éthylènediaminotétraphosphonate de méthylène, triéthylènetétraaminohexaphosphonate de méthylène, tétraéthylènepentaaminoheptaphosphonate de méthylène, pentaéthylènehexaaminooctaphosphonate de méthylène,
- diphosphonate de méthylène, de 1-1' éthylène, de 1,2 éthylène, de 1,1' propylène, de 1,3 propylène, de 1,6 hexaméthylène, 2,4 dihydroxypentaméthylène - 2,4 diphosphonate, 2,5 dihydroxyhexaméthylène - 2,5 disphosphonate; 2,3 dihydroxybutylène - 2,3 diphosphonate; 1 hydroxybenzyle - 1,1' diphosphonate; 1 aminoéthylène 1-1' diphosphonate; hydroxyméthylène diphosphonate : 1 hydroxyéthylène 1,1' diphosphonate; 1 hydroxypropylène 1-1' diphosphonate; 1 hydroxybutylène 1-1' diphosphonate : 1 hydroxyhexaméthylène - 1,1' diphosphonate.

7. Procédé selon l'une des revendications précédentes, caractérisé en ce que l'oxyde de titane est constitué de particules élémentaires de dimension moyenne comprise entre 30 et 70 nm.

8. Procédé selon l'une des revendications précédentes, caractérisé en ce que le mélange est mis en forme par extrusion.

9. Procédé selon l'une des revendications précédentes, caractérisé en ce que le mélange à mettre en forme comprend de 5 à 35 % en poids d'eau ajoutée, de 0,1 à 10 % en poids d'additif de mise en forme, de 55 à 94,9 % en poids en poudre d'oxyde de titane mal cristallisé et/ou amorphe.

10. Procédé de fabrication d'un oxyde de titane susceptible d'être mis en forme consistant à hydrolyser un composé du titane choisi dans le groupe constitué par les halogénures, oxyhalogénures, nitrates et alkoxydes de titane, puis récupérer le précipité obtenu, caractérisé en ce que l'hydrolyse est effectuée en présence d'au moins un composé (I) choisi dans le groupe constitué par les acides phosphoriques organiques de formules suivantes : 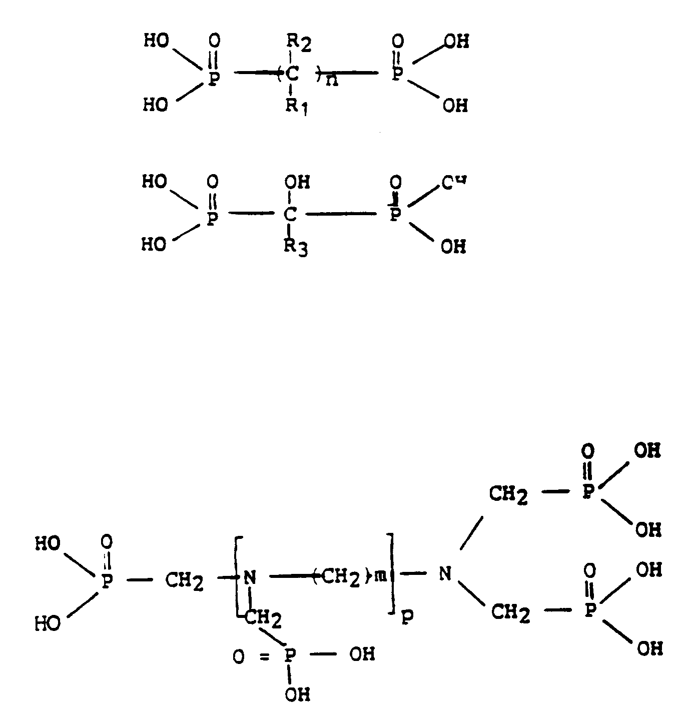 dans lesquelles, n et m sont des nombres entiers compris entre 1 et 6, p est un nombre entier compris entre 0 et 5, R₁, R₂, R₃ identiques ou différents représentant un groupement hydroxyle, amino, aralkyl, aryl, alkyl ou l'hydrogène.

11. Procédé selon la revendication 10 caractérisé en ce que le composé acide est choisi dans le groupe comprenant :
- aminotriphosphonate de méthylène, éthylènediaminotétraphosphonate de méthylène, triéthylènetétraaminohexaphosphonate de méthylène, tétraéthylènepentaaminoheptaphosphonate de méthylène, pentaéthylènehexaaminooctaphosphonate de méthylène
- diphosphonate de méthylène, de 1-1' éthylène, de 1-2 éthylène, de 1,1' propylène, de 1,3 propylène, de 1,6 hexaméthylène, 2,4 dihydroxypentaméthylène - 2,4 diphosphonate, 2,5 dihydroxyhexaméthylène- 2,5 disphosphonate 2,3 dihydroxybutylène - 2,3 diphosphonate; 1 hydroxybenzyle - 1,1' diphosphonate; 1 aminoéthylène 1-1' diphosphonate : hydroxyméthylène diphosphonate : 1 hydroxyéthylène 1,1' diphosphonate : 1 hydroxypropylène 1-1' diphosphonate : 1 hydroxybutylène 1-1' diphosphonate : 1 hydroxyhexaméthylène - 1,1' diphosphonate.

12. Procédé selon l'une quelconque des revendications précédentes, caractérisé en ce que le composé du titane est l'oxychlorure de titane.

13. Procédé selon l'une quelconque des revendications précédentes, caractérisé en ce que la solution du composé de titane soumise à l'hydrolyse contient entre 0,1 et 1,5 mole/litre exprimés en titane.

14. Procédé selon l'une quelconque des revendications précédentes, caractérisé en ce que la concentration molaire en composé acide de la solution à hydrolyser est comprise entre 0,01 et 1 mole/litre, de préférence entre 0,01 et 0,1 mole/litre.

15. Procédé selon l'une quelconque des revendications précédentes, caractérisé en ce que l'hydrolyse est effectuée à une température supérieure ou égale à 70 °C.

## Claims

1. A process for the production of a titanium oxide-based article by shaping a divided product, characterised in that it comprises:
- preparing the titanic oxide in the form of particles of anatase by hydrolysis of a compound of titanium selected from the group formed by titanium halides, oxyhalides, nitrates and alkoxides, in the presence of at least one compound (I) selected from the group formed by acids comprising at least one carboxyl grouping and at least two hydroxyl and/or amine groupings, the acids comprising at least two carboxyl groupings and at least one hydroxyl and/or amine grouping, and the salts of said groups of acids, and the organic phosphoric acids of the following formulae: 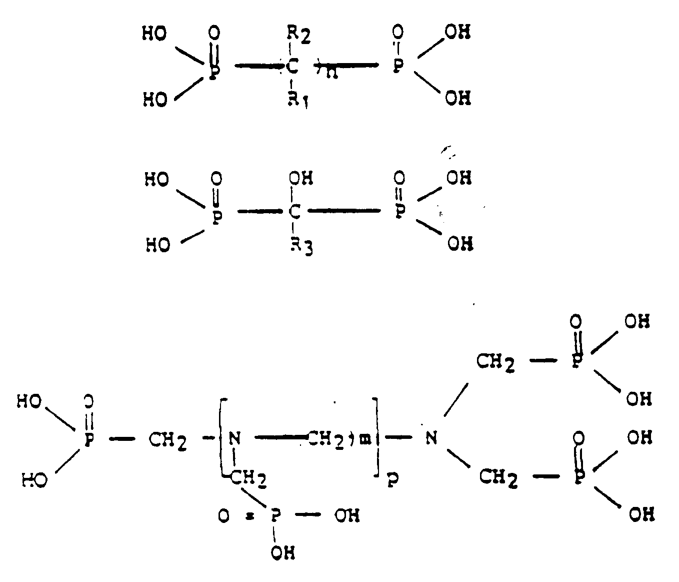 wherein n and m are integers of between 1 and 6, p is an integer of between 0 and 5, R₁, R₂ and R₃ which are identical or different represent a hydroxyl, amino, aralkyl, aryl or all grouping or hydrogen,
- recovering the precipitate obtained,
- drying the titanium oxide obtained in divided form to obtain a slightly crystallised titanium oxide formed by elementary particles of a dimension of greater than 20 nm having a loss on firing of between 1 and 50%,
- producing a mixture containing from 1 to 40% by weight of added water, from 0 to 15% by weight of shaping additive and from 45 to 99% by weight of the dried titanium oxide, and
- shaping said mixture and then drying and possibly calcining the products obtained.

2. A process according to claim 1 characterised in that the acid compound added is a compound with a substituted or unsubstituted hydrocarbon chain.

3. A process according to claim 1 characterised in that the acid compound is a compound with an aliphatic hydrocarbon chain.

4. A process according to claim 2 or claim 3 characterised in that the hydrocarbon chain comprises from 1 to 15 carbon atoms.

5. A process according to claim 4 characterised in that the hydrocarbon chain comprises from 1 to 10 carbon atoms.

6. A process according to one of the preceding claims characterised in that the acid compound added is selected from the group comprising:
- hydroxypolycarboxylic acids and more particularly hydroxydi- or hydroxytricarboxylic acids, preferably malic acid, citric acid and tartronic acid,
- (polyhydroxy)monocarboxylic acids, preferably glucoheptonic acid and gluconic acid,
- poly(hydroxycarboxylic) acids, preferably tartronic acid,
- dicarboxylic aminoacids and their corresponding amides, preferably aspartic acid, asparagine, glutamic acid and glutamine,
- monocarboxylic aminoacids which may or may not be hydroxylated, preferably lysine, serine, tyrosine, hydroxyproline, threonine and arginine,
- methylene aminotriphosphonate, methylene ethylenediaminotetraphosphonate, methylene triethylenetetraaminohexaphosphonate, methylene tetraethylenepentaaminoheptaphosphonate, and methylene pentaethylenehexaaminooctaphosphonate,
- methylene 1,1'-ethylene, 1,2-ethylene, 1,1'-propylene, 1,3-propylene and 1,6-hexamethylene diphosphonate, 2,4-dihydroxypentamethylene-2,4-diphosphonate, 2,5-dihydroxyhexamethylene-2,5-diphosphonate; 2,3-dihydroxybutylene-2,3-diphosphonate; 1-hydroxybenzyl-1,1'-diphosphonate; 1-aminoethylene-1,1'-diphosphonate; hydroxymethylenediphosphonate; 1-hydroxyethylene-1,1'-diphosphonate; 1-hydroxy-propylene-1,1'-diphosphonate; 1-hydroxybutylene-1,1'-diphosphonate; and 1-hydroxyhexamethylene-1,1'-diphosphonate.

7. A process according to one of the preceding claims characterised in that the titanium oxide is formed by elementary particles of a mean dimension of between 30 and 70 nm.

8. A process according to one of the preceding claims characterised in that the mixture is shaped by extrusion.

9. A process according to one of the preceding claims characterised in that the mixture to be shaped comprises from 5 to 35% by weight of added water, from 0.1 to 10% by weight of shaping additive and from 55 to 94.9% by weight of poorly crystallised and/or amorphous titanium oxide powder.

10. A process for the production of a titanium oxide which is capable of being shaped comprising hydrolysing a compound of titanium selected from the group formed by titanium halides, oxyhalides, nitrates and alkoxides, and then recovering the precipitate obtained, characterised in that the hydrolysis operation is effected in the presence of at least one compound (I) selected from the group formed by organic phosphoric acids of the following formulae: 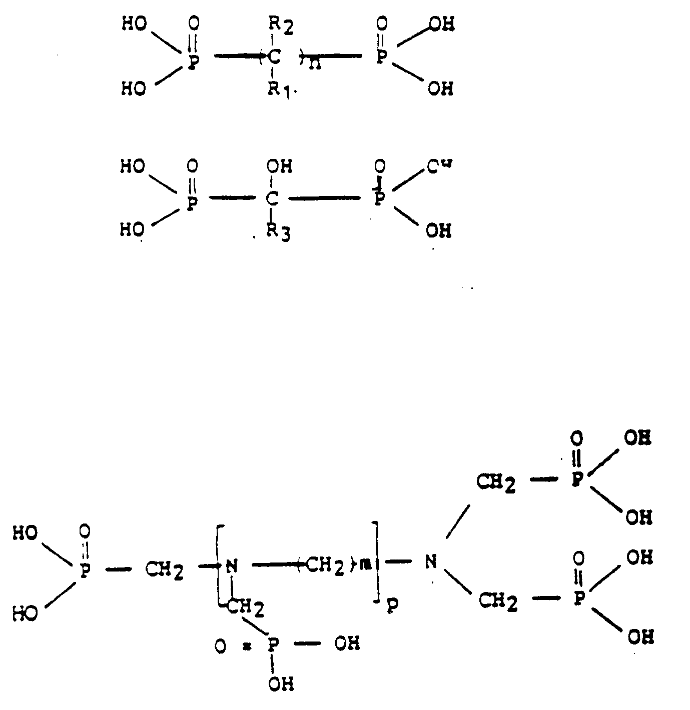 wherein n and m are integers of between 1 and 6, p is an integer of between 0 and 5 and R₁, R₂ and R₃ which are identical or different represent a hydroxyl, amino, aralkyl, aryl or alkyl grouping or hydrogen.

11. A process according to claim 10 characterised in that the acid compound is selected from the group comprising:
- methylene aminotriphosphonate, methylene ethylenediaminotetraphosphonate, methylene triethylenetetraaminohexaphosphonate, methylene tetraethylenepentaminoheptaphosphonate, and methylene pentaethylenehexaaminocctaphosphonate,
- methylene, 1,1'-ethylene, 1,2-ethylene, 1,1'-propylene, 1,3-propylene and 1,6-hexamethylene diphosphonate, 2,4-dihydroxypentamethylene-2,4-diphosphonate, 2,5-dihydroxyhexamethylene-2,5-diphosphonate; 2,3-dihydroxybutylene-2,3-diphosphonate; 1-hydroxybenzyl-1,1'-diphosphonate; 1-aminoethylene-1,1'-diphosphonate; hydroxymethylenediphosphonate; 1-hydroxyethylene-1,1'-diphosphonate; 1-hydroxy-propylene-1,1'-diphosphonate; 1-hydroxybutylene-1,1'-diphosphonate; and 1-hydroxyhexamethylene-1,1'-diphosphonate.

12. A process according to any one of the preceding claims characterised in that the titanic compound is titanium oxychloride.

13. A process according to any one of the preceding claims characterised in that the solution of the titanium compound which is subjected to the hydrolysis operation contains between 0.1 and 1.5 mole/litre expressed in respect of titanium.

14. A process according to any one of the preceding claims characterised in that the molar concentration of acid compound in the solution to be hydrolysed is between 0.01 and 1 mole/litre, preferably between 0.01 and 0.1 mole/litre.

15. A process according to any one of the preceding claims characterised in that hydrolysis operation is effected at a temperature of higher than or equal to 70°C.

## Patentansprüche

1. Verfahren zur Herstellung eines Gegenstandes auf Basis von Titanoxid, durch Formen eines teilchenförmigen Erzeugnisses,
dadurch gekennzeichnet, daß es umfaßt:
- das Titanoxid in Form von Anatas-Teilchen herzustellen durch Hydrolyse einer Titanverbindung, ausegewählt aus der Gruppe, bestehend aus den Halogeniden, Oxahalogeniden, Nitraten und Alkoxiden von Titan, in Gegenwart von mindestens einer Verbindung (I), ausgewählt aus der Gruppe, bestehend aus den Säuren, welche mindestens eine Carboxylgruppe und mindestens zwei Hydroxyl- und/oder Aminogruppen enthalten, den Säuren, welche mindestens zwei Carboxylgruppen und mindestens eine Hydroxyl- und/oder Aminogruppe enthalten, und den Salzen dieser Gruppen von Säuren, und der organischen Phosphorsäuren der folgenden Formeln: 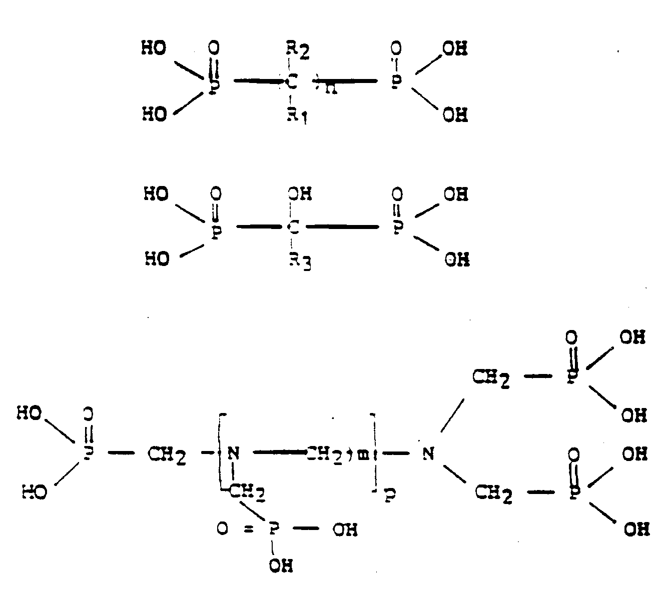 in welchen n und m ganze Zahlen zwischen 1 und 6 sind, p eine ganze Zahl zwischen 0 und 5 ist, und R₁, R₂, R₃ gleichermaßen oder jeweils voneinander unabhängig eine Hydroxyl-, Amino-, Arylalkyl-, Aryl-, Alkylgruppe oder Wasserstoff darstellen,
- den erhaltenen Niederschlag zurückzugewinnen,
- das in Teilchenform erhaltene Titanoxid zu trocknen, um ein geringfügig kristallisiertes Titanoxid zu erhalten, welches aus kleinsten Teilchen mit eine Abmessung größer als 20 nm besteht, welche einen Glühverlust von 1 bis 50 % aufweisen,
- eine Mischung herzustellen, welche 1 bis 40 Gew.-% zugesetztes Wasser, 0 bis 15 Gew.-% eines Hilfsstoffs für das Formen und 45 bis 99 Gew.-% getrocknetes Titanoxid enthält,
- die Mischung zu formen, und dann die erhaltenen Erzeugnisse gegebenenfalls zu trocknen und zu kalzinieren.

2. Verfahren nach Anspruch 1,
dadurch gekennzeichnet,
daß die zugesetzte saure Verbindung eine Verbindung mit eine substituierten oder nicht substituierten Kohlenwasserstoffkette ist.

3. Verfahren nach Anspruch 1,
dadurch gekennzeichnet,
daß die saure Verbindung eine Verbindung mit eine aliphatischen Kohlenwasserstoffkette ist.

4. Verfahren nach Anspruch 2 oder 3,
dadurch gekennzeichnet,
daß die Kohlenwasserstoffkette 1 bis 15 Kohlenstoffatome umfaßt.

5. Verfahren nach Anspruch 4,
dadurch gekennzeichnet,
daß die Kohlenwasserstoffkette 1 bis 10 Kohlenstoffatome umfaßt.

6. Verfahren nach irgendeinem der vorangegangenen Ansprüche,
dadurch gekennzeichnet,
daß die zugesetzte saure Verbindung ausgewählt ist aus der Gruppe, umfassend:
- die Hydroxypolycarbonsäuren, und insbesondere die Hydroxydi- oder Hydroxytricarbonsäuren, vorzugsweise Äpfelsäure, Citronensäure und Tartronsäure,
- die (Polyhydroxy)monocarbonsäuren, vorzugsweise Glucoheptonsäure und Gluconsäure,
- die Poly(hydroxycarbonsäuren), vorzugsweise Weinsäure,
- die Aminodicarbonsäuren und deren entsprechende Amide, vorzugsweise Asparaginsäure, Asparagin, Glutaminsäure und Glutamin,
- die Aminocarbonsäuren, hydroxyliert oder nicht hydroxyliert, vorzugweise Lysin, Serin, Tyrosin, Hydroxyprolin, Threonin und Arginin,
- Methylenaminotriphosphonat, Methylenethylendiaminotetraphosphonat, Methylentriethylentetraaminohexaphosphonat, Methylentetraethylenpentaaminoheptaphosphonat, Methylenpentaethylenhexaaminooctaphosphonat,
- Methylendiphosphonat, 1,1'-Ethylendiphosphonat, 1,2-Ethylendiphosphonat, 1,1'-Propylendiphosphonat, 1,3-Propylendiphosphonat, 1,6-Hexamethylendiphosphonat, 2,4-Dihydroxypentamethylen-2,4-diphosphonat, 2,5-Dihydroxyhexamethylen-2,5-disphosphonat 2,3-Dihydroxybutylen-2,3-diphosphonat, 1-Hydroxybenzyl-1,1'-diphosphonat, 1-Aminoethylen-1,1'-diphosphonat, Hydroxymethylendiphosphonat, 1-Hydroxyethylen-1,1'-diphosphonat, 1-Hydroxypropylen1,1'-diphosphonat, 1-Hydroxybutylen-1,1'-diphosphonat, 1-Hydroxyhexamethylen-1,1'-diphosphonat.

7. Verfahren nach irgendeinem der vorangegangenen Ansprüche,
dadurch gekennzeichnet,
daß das Titanoxid aus kleinsten Teilchen mit einer mittleren Abmessung zwischen 30 und 70 nm besteht.

8. Verfahren nach irgendeinem der vorangegangenen Ansprüche,
dadurch gekennzeichnet,
daß die Mischung durch Extrusion geformt wird.

9. Verfahren nach irgendeinem der vorangegangenen Ansprüche,
dadurch gekennzeichnet,
daß die zu formende Mischung 5 bis 35 Gew.-% zugesetztes Wasser, 0,1 bis 10 Gew.-% eines Hilfsstoffs für das Formen und 55 bis 94,9 Gew.-% schlecht kristallisiertes und/oder amorphes Titanoxidpulver umfaßt.

10. Verfahren zur Herstellung eines formfähigen Titanoxids, welches darin besteht, eine Titanverbindung, augewählt aus der Gruppe, bestehend aus den Halogeniden, Oxyhalogeniden, Nitraten und Alkoxiden von Titan, zu hydrolysieren und dann den erhaltenen Niedersclag zurückzugewinnen,
dadurch gekennzeichnet,
daß die Hydrolyse ausegeführt wird in Gegenwart von mindestens einer Verbindung (I), ausegewählt aus der Gruppe, bestehend aus den organischen Phosphorsauren der folgenden Formeln: 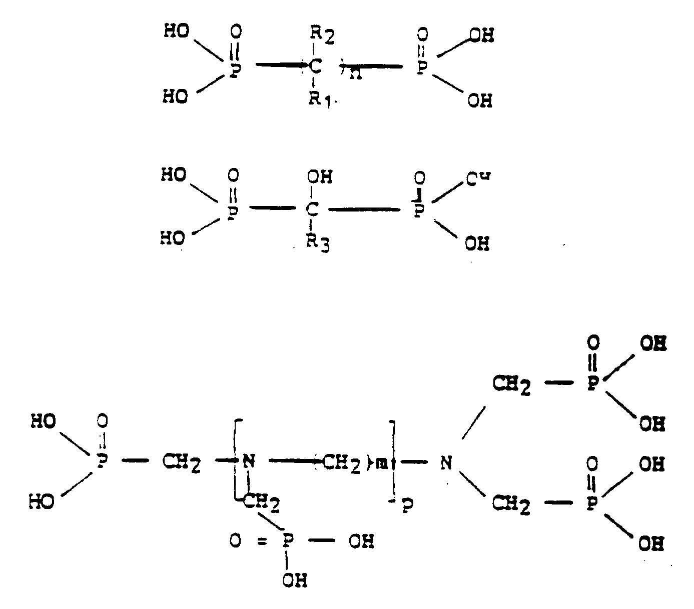 in welchen n und m ganze Zahlen zwischen 1 und 6 sind, p eine ganze Zahl zwischen 0 und 5 ist, und R₁, R₂, R₃ gleichermaßen oder jeweils voneinander unabhängig eine Hydroxyl-, Amino-, Arylalkyl, Aryl-, Alkylgruppe oder Wasserstoff darstellen.

11. Verfahren nach Anspruch 10,
dadurch gekennzeichnet,
daß die saure Verbindung ausgewählt wird aus der Gruppe, umfassend
- Methylenaminotriphosphonat, Methylenethylendiaminotetraphosphonat, Methylentriethylentetraaminohexaphosphonat, Methylentetraethylenpentaaminoheptaphosphonat, Methylenpentaethylenhexaaminooctaphosphonat,
- Methylendiphosphonat, 1,1'-Ethylendiphosphonat, 1,2-Ethylendiphosphonat, 1,1'-Propylendiphosphonat, 1,3-Propylendiphosphonat, 1,6-Hexamethylendiphosphonat, 2,4-Dihydroxypentamethylen-2,4-diphosphonat, 2,5-Dihydroxyhexamethylen-2,5-disphosphonat, 2,3-Dihydroxybutylen-2,3-diphosphonat, 1-Hydroxybenzyl-1,1'-diphosphonat, 1-Aminoethylen-1,1'-diphosphonat, Hydroxymethylendiphosphonat, 1-Hydroxyethylen-1,1'-diphosphonat, 1-Hydroxypropylen-1,1'-diphosphonat, 1-Hydroxybutylen-1,1'-diphosphonat, 1-Hydroxyhexamethylen-1,1'-diphosphonat.

12. Verfahren nach irgendeinem der vorangegangenen Ansprüche,
dadurch gekennzeichnet,
daß die Titanverbindung Titanoxychlorid ist.

13. Verfahren nach irgendeinem der vorangegangenen Ansprüche,
dadurch gekennzeichnet,
daß die der Hydrolyse unterworfene Lösung der Titanverbindung zwischen 0,1 und 1,5 Mol/l bezogen auf Titan enthält.

14. Verfahren nach irgendeinem der vorangegangenen Ansprüche,
dadurch gekennzeichnet,
daß die molare Konzentration an saurer Verbindung der zu hydrolysierenden Lösung zwischen 0,01 und 1 Mol/l, vorzugsweise zwischen 0,01 und 0,1 Mol/l liegt.

15. Verfahren nach irgendeinem der vorangegangenen Ansprüche,
dadurch gekennzeichnet,
daß die Hydrolyse bei einer Temperatur größer als oder gleich 70°C ausgeführt wird.
